# EUROPÄISCHE PATENTSCHRIFT

(11) **EP 2 528 863 B1**
(45) Veröffentlichungstag und Bekanntmachung des Hinweises auf die Patenterteilung: **04.01.2017**
(21) Anmeldenummer: 11701274.0
(22) Anmeldetag: 28.01.2011
(51) Int. Cl.: C01B 25/45, H01M 4/58, H01M 10/052

(54) **SUBSTITUIERTES LITHIUM-MANGAN-METALLPHOSPHAT**
SUBSTITUTED LITHIUM-MANGANESE METAL PHOSPHATE
PHOSPHATE MÉTALLIQUE DE LITHIUM-MANGANÈSE SUBSTITUÉ

(30) Priorität: 28.01.2010 DE 102010006077
(43) Veröffentlichungstag der Anmeldung: 05.12.2012
(73) Patentinhaber: Johnson Matthey PLC, London EC4A 4AB (GB)
(72) Erfinder: NUSPL, Gerhard, 81543 München (DE); TRAN, Nicolas, 85405 Nandlstadt (DE); DOLLINGER, Jasmin, 85356 Freising (DE); VOGLER, Christian, 85368 Moosburg (DE)
(74) Vertreter: Gee, Rachel Sarah
(86) Internationale Anmeldenummer: PCT/EP2011/051199
(87) Internationale Veröffentlichungsnummer: WO 2011/092281

(56) Entgegenhaltungen:
- EP-A1- 1 939 959
- WO-A1-2008/077448
- WO-A1-2010/130684
- DE-A1- 10 117 904

## Beschreibung

Die vorliegende Erfindung betrifft ein neues substituiertes Lithium-Mangan-Metallphosphat, ein Verfahren zu dessen Herstellung sowie seine Verwendung als Kathodenmaterial in einer Sekundärlithiumionenbatterie.

Seit den Publikationen von Goodenough et al. (J. Electrochem. Soc., 144, 1188-1194, 1997) fand insbesondere Lithiumeisenphosphat großes Interesse zur Verwendung als Kathodenmaterial in wiederaufladbaren Sekundärlithiumionenbatterien. Lithiumeisenphosphat bietet gegenüber herkömmlichen auf Spinellen oder Schichtoxiden basierten Lithiumverbindungen, wie Lithiummanganoxid, Lithiumkobaltoxid und Lithiumnickeloxid höhere Sicherheitseigenschaften im delithiiertem Zustand wie sie insbesondere für den zukünftigen Einsatz von Batterien bei Elektroautos, elektrisch betriebenen Werkzeugen etc. in der Zukunft nötig sind.

Das reine Lithiumeisenphosphatmaterial wurde durch das sogenannte "carbon coating" (Ravet et al., Meeting of Electrochemical Society, Honolulu, 17. - 31. Oktober 1999, EP 1 084 182 B1) verbessert, da eine erhöhte Kapazität des mit Kohlenstoff beschichteten Materials bei Raumtemperatur erhalten wird (160 mAH/g).

Neben den üblichen Festkörpersynthesen (US 5,910,382 C1 bzw. die US 6,514,640 C1) wurde in der WO 2005/051840 eine Hydrothermalsynthese für Lithiumeisenphosphat mit der Möglichkeit der Kontrolle der Größe und Morphologie der Lithiumeisenphosphatteilchen offenbart.

Nachteilig an Lithiumeisenphosphat ist insbesondere dessen Redoxpaar Fe³⁺/Fe²⁺, das gegenüber Li/Li⁺ ein bedeutend niedriges Redoxpotential (3,45 V gegen Li/Li⁺) als beispielsweise das Redoxpaar Co³⁺/Co⁴⁺ in LiCoO₂ aufweist (3,9 V gegen Li/Li⁺) .

Insbesondere Lithiummanganphosphat LiMnPO₄ ist in Anbetracht seines höheren Mn²⁺/Mn³⁺ Redoxpaars (4,1 Volt) gegen Li/Li⁺ von Interesse. LiMnPO₄ wurde auch schon von Goodenough et al., US 5,910,382 offenbart.

Die Herstellung von elektrochemisch aktiven und insbesondere kohlenstoffbeschichteten LiMnPO₄ hat sich jedoch als sehr schwierig herausgestellt.

EP 1 939 959 A1 betrifft ein aktives, positives Elektrodenmaterial der allgemeinen Formel LiMn₁₋ₓMₓPO₄ mit 0 ≤ x < 1 und M ausgewählt aus der Gruppe bestehend aus Co, Ni, Fe, Zn, Cu, Ti, Sn, Zr, V und A1, das in nicht-wässrigen Elektrolytbatterien eingesetzt werden kann. Die Herstellung dieses Elektrodenmaterials umfasst das Vermischen einer Kohlenstoff-Quelle mit Lithium-Mangan-Phosphat LiMnPO₄ oder einer Verbindung LiMn₁₋ₓMₓPO₄ und Erhitzen der Mischung unter Inertgasatmosphäre.

Die elektrischen Eigenschaften von Lithiummanganphosphat wurden durch Eisensubstitution der Manganstellen verbessert:
WO 2008/077448 A1 offenbart ein positives Elektrodenmaterial der allgemeinen Formel LiFe₁₋ₓMₓPO₄, wobei M Co und/oder Mn ist und sich der Dotierungsgehalt für M zwischen 0 < x < 1 und 0,4 < x < 0,95 bewegen kann. Bei der Herstellung der Verbindungen gemäß der WO 2008/077448 A1 wird eine wässrigen Mischung mit einem pH-Wert zwischen 6 und 10 enthaltend ein dipolares, aprotisches Additiv sowie die entsprechenden Vorläuferverbindungen unter Normaldruck erhitzt.

Die DE 101 17 904 A1 offenbart binäre, ternäre und quaternäre Lithiumeisenphosphate der allgemeinen Formel Li(FeₓM¹_{y}M²_{z})PO₄, wobei M¹ und M² mindestens ein Element der Sc, Ti, V, Cr, Mn, Co, Ni, Cu, Zn, Be, Mg, Ca, Sr, Ba, A1, Zr und La umfassenden Gruppe sein kann, und x = 0,5, y = 0-0,5, z = 0-0,5 ist, mit der Maßgabe, dass x + y + z = 1 ist oder X = 0, y = 1, z = 0 bedeutet, falls M¹ ausgewählt ist aus der Gruppe aus Sc, Ti, V, Cr, Mn, Co, Ni, Cu und Zn. Die Herstellung dieser Lithiumeisenphosphate erfolgt durch Kopräzipitation der entsprechenden Vorläuferverbindungen und Trocknen des Fällungsprodukts unter Inertgasatmosphäre bei Raumtemperatur bis 200°C, sowie Tempern im Temperaturbereich von 200°C bis 800°C.

Herle et al. in Nature Materials, Vol. 3, S. 147-151 (2004) beschreiben mit Zirkonium dotierte Lithium-Eisen und Lithium-Nickelphosphate. Morgan et al. beschreibt in Electrochem. Solid State Lett. 7 (2), A30-A32 (2004) die intrinsische Lithiumionenleitfähigkeit in LiₓMPO₄ (M = Mn, Fe, Co, Ni) Olivinen. Yamada et al. beschäftigen sich in Chem. Mater. 18, S. 804-813, 2004 mit den elektrochemischen, magnetischen und strukturellen Besonderheiten von Liₓ(Mn_{y}Fe_{1-y})PO₄, die z.B. auch in der WO2009/009758 offenbart sind. Strukturelle Variationen von Liₓ(Mn_{y}Fe_{1-y})PO₄, d.h. der Lithiophilit-Triphylit Serie wurden von Losey et al. The Canadian Mineralogist, Vol. 42, S. 1105-1115 (2004) beschrieben. Die praktischen Auswirkungen der letzteren Untersuchungen bezüglich des Diffusionsmechanismus der Deinterkalation in Liₓ(Mn_{y}Fe_{1-y})PO₄ Kathodenmaterial finden sich bei Molenda et al. Solid State Ionics 177, 2617-2624 (2006) .

Jedoch tritt eine plateauähnliche Region bei den Entladekurven bei 3,5 Volt gegenüber Lithium (Eisenplateau) auf, dessen Länge sich verglichen mit reinem LiMnPO₄ mit zunehmenden Eisengehalt vergrößert, was in einem Verlust an Energiedichte resultiert (siehe Yamada et al. in der vorstehend erwähnten Veröffentlichung). Die langsame Kinetik (Ladungs- und Entladungskinetiken) von manganhaltigen Metallphosphaten, insbesondere von Liₓ(Mn_{y}Fe_{1-y})PO₄ mit y > 0.8 machen bislang die Verwendung dieser Verbindungen für Batterieanwendungen weitgehend unmöglich.

Die Aufgabe der vorliegenden Erfindung bestand daher darin, geeignete Lithium-Mangan-Phosphat-Derivate zur Verfügung zu stellen, die eine hohe Energiedichte beim Einsatz als Kathodenmaterial ermöglichen und ein hohes Redoxpotential mit einer schnellen Kinetik im Hinblick auf Ladungs- und Entladungsprozesse zur Verfügung stellen.

Diese Aufgabe wird gelöst durch ein substituiertes Lithium-Mangan-Metallphosphat der Formel

LiFeₓMn_{1-x-y}MyPO₄

bei dem M ein zweiwertiges Metall, insbesondere aus der Gruppe, Zn, Ca und Cd ist und wobei gilt: x < 1, 0 < y < 0,15 und x + y < 1, oder bei dem M Mg ist und wobei gilt: 0,01 ≤ x ≤ 0,11, 0,07 < y < 0,2 und x + y < 0,2.

In Weiterbildungen der Erfindung ist das zweiwertige Metall M Zn, Mg, Ca oder deren Kombinationen, insbesondere Zn und Ca.

Überraschenderweise hat sich im Rahmen der vorliegenden Erfindung gezeigt, dass diese elektrisch inaktiven Substitutionselemente die Bereitstellung von Materialien mit besonders hoher Energiedichte ermöglichen, wenn sie als Elektrodenmaterialien eingesetzt werden.

Es wurde gefunden, dass bei einer Ausführungsform des substituierten Lithium-Metallphosphats LiFeₓMn_{1-x-y}M_{y}PO₄ der Wert für y im Bereich von mehr als 0,07 bis 0,20 liegt und in einer Ausführungsform 0,1 beträgt.

Die Substitution (oder Dotierung) durch die an sich elektrochemisch inaktiven zweiwertigen Metallkationen scheint bei Werten von x = 0,1 und y = 0,1 - 0,15, bevorzugt 0,1 - 0,13, insbesondere 0,11 ± 0,1 die allerbesten Ergebnisse im Hinblick auf Energiedichte des erfindungsgemäßen Materials zu liefern. Für die Dotierung mit Magnesium (LiFeₓMn_{1-x-y}M_{y}PO₄) wurden gegenüber Zn und Ca leicht abweichende Werte gefunden. Hier gilt, dass 0,01 ≤ x ≤ 0,11 und 0,07 < y < 0,2 bevorzugt 0,075 ≤ y ≤ 0,15 ist und x + y < 0,2 sein muss. D.h. dass ein hoher Mangangehalt mit einem relativ niedrigen Eisengehalt und einem relativ hohen Magnesiumgehalt die besten Ergebnisse hinsichtlich Energiedichte liefern, was im Hinblick auf den elektrisch inaktiven Charakter des Magnesiums besonders überraschend ist. Es wurde gefunden, dass für erfindungsgemäße Verbindungen wie LiMn_{0,80}Fe_{0,10}Zn_{0,10}PO₄, LiMn_{0,80}Fe_{0,10}Zn_{0,10}PO_{y}, und LiMn_{0,80}Fe_{0,10}Ca_{0,10}PO₄, die spezifische Kapazität genau so groß ist wie für LiMn₀,₅₆Fe₀,₃₃Zn₀,₁₀PO₄ und das 4V Plateau ist länger, was eine Erhöhung der Energiedichte bedeutet.

In weiteren Ausführungsformen der vorliegenden Erfindung beträgt der Wert für x in dem erfindungsgemäßen gemischten Lithium-Metallphosphat der allgemeinen Formel LiFeₓMn_{1-x-y}M_{y}PO₄ 0,15 - 0,4, besonders bevorzugt 0,05 - 2, ganz besonders bevorzugt 0,15 ± 0,3, insbesondere 0,33. Dieser Wert, insbesondere in Verbindung mit dem vorstehend genannten Wert für y von 0,1 ergibt den am meisten bevorzugten Kompromiss zwischen Energiedichte und Strombelastbarkeit des erfindungsgemäßen Materials. Dies bedeutet, dass die Verbindung LiFeₓMn_{1-x-y}M_{y}PO₄ für M = Zn oder Ca mit x = 0,33 und y = 0,10 eine vergleichbare Strombelastbarkeit bis 20C bei der Entladung aufweist wie die von LiFePO₄ des Standes der Technik (z.B. von der Firma Süd Chemie erhältlich), aber zusätzlich auch einen Gewinn in Energiedichte (ca. 20 % gegenüber LiFePO₄ (gemessen gegen eine Lithium-Titanat (Li₄Ti₅O₁₂) Anode) .

In weiteren Ausführungsformen der vorliegenden Erfindung umfasst das substituierte Lithium-Mangan-Metallphosphat zusätzlich Kohlenstoff. Der Kohlenstoff ist dabei besonders bevorzugt im gesamten substituierten Lithium-Mangan-Metallphosphat gleichmäßig verteilt. In anderen Worten, der Kohlenstoff bildet eine Art Matrix, in dem das erfindungsgemäße Lithium-Mangan-Metallphosphat eingelagert ist. Dabei spielt es für den vorliegend verwendeten Begriff "Matrix" in seiner Bedeutung keine Rolle, ob z.B. die Kohlenstoffpartikel als "Nukleierungsstellen" für das erfindungsgemäße LiFeₓMn_{1-x-y}M_{y}PO₄ dienen, d.h. also dass diese auf dem Kohlenstoff abgelagert sind, oder ob, wie in einer besonders bevorzugten Weiterbildung der vorliegenden Erfindung die einzelnen Partikel des Lithium-Mangan-Metallphosphats LiFeₓMn_{1-x-y}M_{y}PO₄ von Kohlenstoff bedeckt, also umhüllt oder anders gesagt beschichtet sind. Beide Varianten werden erfindungsgemäß gleichwertig verstanden und fallen unter die vorstehende Definition.

Wichtig ist für die Zwecke der vorliegenden Erfindung nur, dass der Kohlenstoff im erfindungsgemäßen substituierten Lithium-Mangan-Metallphosphat LiFeₓMn_{1-x-y}M_{y}PO₄ gleichmäßig verteilt ist und eine Art (dreidimensionale) Matrix bildet. Das Vorhandensein von Kohlenstoff bzw. einer Kohlenstoffmatrix kann in vorteilhaften Weiterbildungen der vorliegenden Erfindung die weitere Zugabe von elektrisch leitfähigen Zusatzstoffen wie z.B. Leitruß, Graphit etc. beim Einsatz des erfindungsgemäßen LiFeₓMn_{1-x-y}M_{y}PO₄ als Elektrodenmaterial obsolet machen.

Der Anteil an Kohlenstoff bezogen auf das Lithium-Mangan-Metallphosphat beträgt in einer Weiterbildung der Erfindung ≤ 4 Gew.-%, in weiteren Ausführungsformen ≤ 2,5 Gew%, in noch weiteren Ausführungsformen ≤ 2,2 Gew.-% und in noch weiteren Ausführungsformen ≤ 2,0 Gew.-%. Damit werden erfindungsgemäß die besten Energiedichten des erfindungsgemäßen Materials erreicht.

Das erfindungsgemäße substituierte Lithium-Mangan-Metallphosphat LiFeₓMn_{1-x-y}M_{y}PO₄ ist bevorzugt in einer Kathode für eine Sekundärlithiumionenbatterie als Aktivmaterial enthalten. Dabei kann, wie gesagt, diese Kathode das erfindungsgemäße LiFeₓMn_{1-x-y}M_{y}PO₄ auch ohne weiteren Zusatz eines weiteren leitfähigen Materials wie z.B. Leitruß, Acetylenschwarz, Ketjen-schwarz, Graphit usw. enthalten (in anderen Worten leitmittelzusatzfrei sein), und zwar sowohl bei dem erfindungsgemäßen kohlenstoffhaltigen LiFeₓMn_{1-x-y}M_{y}PO₄ wie bei dem kohlenstofffreien LiFeₓMn_{1-x-y}M_{y}PO₄.

In weiteren bevorzugten Ausführungsformen enthält die erfindungsgemäße Kathode eine weitere Lithium-Metall-Sauerstoff-Verbindung. Dieser Zusatz erhöht die Energiedichte um bis zu ca. 10 - 15 %, je nach Art der weiteren gemischten Lithium-Metallverbindung verglichen mit Kathoden, die nur das erfindungsgemäße LiFeₓMn_{1-x-y}M_{y}PO₄ als alleiniges Aktivmaterial enthalten.

Die weitere Lithium-Metall-Sauerstoff-Verbindung ist bevorzugt ausgewählt aus substituiertem oder nicht substituiertem LiCoO₂, LiMn₂O₄, Li(Ni,Mn,Co)O₂ , Li(Ni,Co,Al)O₂ und LiNiO₂, sowie LiMnFePO₄, LiFePO₄, LiCoPO₄, LiMnPO₄ und Mischungen davon.

Die Aufgabe wird weiter gelöst durch ein Verfahren zur Herstellung eines erfindungsgemäßen gemischten Lithium-Mangan-Metallphosphats umfassend die folgenden Schritte:
a. des Herstellen einer Mischung, enthaltend eine Li-Ausgangsverbindung, eine Mn- Ausgangsverbindung, eine Fe-Ausgangsverbindung, eine M²⁺ Ausgangsverbindung und eine PO₄³⁻ Ausgangsverbindung bis zur Bildung eines Niederschlags bzw. einer Suspension in wässriger Lösung,
b. des Durchführens einer Dispergier- oder Mahlbehandlung der Mischung und/oder der Suspension. Vorzugsweise wird diese Behandlung so lange durchgeführt, bis der D₉₀-Wert der Teilchen in der Mischung weniger als 50 µm beträgt, bevorzugt bei maximal 25 µm;
c. der Gewinnung von LiFeₓMn_{1-x-y}M_{y}PO₄ wobei x und y die vorstehend genannten Bedeutungen aufweisen, aus der Suspension durch Umsetzung unter hydrothermalen Bedingungen bei Temperaturen von 100°C bis 200°C sowie einem Druck von 1 bar bis 40 bar Dampfdruck.

Unter dem Begriff "hydrothermale Bedingungen" werden vorliegend Temperaturen von 100°C bis 200°C , bevorzugt 100°C bis 160°C und ganz besonders bevorzugt 100°C bis 130°C sowie ein Druck von 1 bar bis 40 bar Dampfdruck verstanden. Insbesondere hat sich überraschenderweise gezeigt, dass die Synthese bei der ganz besonders bevorzugten Temperatur von 100 - 130°C, insbesondere bei 130 ± 5°C zu einer Erhöhung der spezifischen Kapazität des so erhaltenen erfindungsgemäßen LiFeₓMn_{1-x-y}M_{y}PO₄ führt verglichen mit der Umsetzung bei mehr als 160°C.

Wie gesagt findet die Synthese in wässriger Lösung/Suspension statt. Der pH der Reaktionslösung beträgt am Ende der Reaktion ca. 6, d.h. die Reaktion selbst findet in nicht-basischem Milieu statt.

Das erfindungsgemäße Verfahren ermöglicht insbesondere die Herstellung von phasenreinem LiFeₓMn_{1-x-y}M_{y}PO_{4,} das frei von mittels XRD zu ermittelnden Verunreinigungen ist.

In bevorzugten Weiterbildungen des erfindungsgemäßen Verfahrens beginnt die Dispergier- oder Mahlbehandlung vor oder während der Suspensionsbildung und wird bis zum Abschluss der Suspendierung/Fällung fortgesetzt.

Bevorzugt setzt die Dispergier- oder Mahlbehandlung vor der Suspendierung/Fällung der Mischung ein, um eine erhöhte Kristallkeimbildung hervorzurufen und um die Bildung großer Kristalle und Kristallagglomerate zu verhindern.

Nach der Hydrothermalbehandlung wird das erfindungsgemäß erhaltene LiFeₓMn_{1-x-y}M_{y}PO₄ durch Filtration und/oder Zentrifugation abgetrennt sowie getrocknet und in bevorzugten Weiterbildungen der Erfindung deagglomeriert wird, z.B. durch Mahlen mit einer Luftstrahlmühle.

In Weiterbildungen des erfindungsgemäßen Verfahrens wird während Schritt a) oder c) ein kohlenstoffhaltiges Material zugegeben. Dies kann entweder reiner Kohlenstoff sein, wie z.B. Graphit, Acetylen-Ruß oder Ketjen-Schwarz, oder aber eine kohlenstoffhaltige Vorläuferverbindung, die sich anschließend unter thermischer Einwirkung zu Kohlenstoff zersetzt, z.B. Stärke, Gelatine, ein Polyol, ein Zucker wie Mannose, Fructose, Sucrose, Laktose, Galactose, ein z.T. wasserlösliches Polymer wie z.B. ein Polyacrylat usw.

Alternativ kann auch das nach der Hydrothermalbehandlung erhaltene LiFeₓMn_{1-x-y}M_{y}PO₄ mit einer wie vorstehend definierten kohlenstoffhaltigen Material vermischt oder mit einer wässrigen Lösung desselben imprägniert werden. Dies kann sowohl direkt nach der Isolierung (Filtrierung) des LiFeₓMn_{1-x-y}M_{y}PO₄ oder nach seiner Trocknung oder Deagglomerierung geschehen.

Anschließend wird z.B. die Mischung aus LiFeₓMn_{1-x-y}M_{y}PO₄ und Kohlenstoff-Vorläuferverbindung (das z.B. während dem Verfahren zugegeben wurde) bzw. das mit der Kohlenstoff-Vorläuferverbindung imprägnierte LiFeₓMn_{1-x-y}M_{y}PO₄ getrocknet und auf eine Temperatur zwischen 500 °C und 850 °C erhitzt, wobei die Kohlenstoff-Vorläuferverbindung zu reinem Kohlenstoff pyrolysiert wird, der dann die LiFeₓMn_{1-x-y}M_{y}PO₄ Partikel ganz oder zumindest teilweise als Schicht bedeckt.

Nach der Pyrolyse schließt sich üblicherweise eine Mahl- oder Deagglomerationsbehandlung an.

Die Trocknung des erfindungsgemäß erhaltenen LiFeₓMn_{1-x-y}M_{y}PO₄ findet vorzugsweise unter Schutzgas, an Luft oder im Vakuum bei Temperaturen von 50°C bis 200°C statt, bevorzugt unter Schutzgas und die Pyrolyse bevorzugt ebenfalls unter Schutzgas, bevorzugt Stickstoff.

Bevorzugt werden im Rahmen des erfindungsgemäßen Verfahrens die Li⁺-Quelle, die Fe²⁺- und Mn²⁺-Quelle sowie die M²⁺-Quelle in Form von wässrigen Lösungen eingesetzt und die PO₄³⁻-Quelle in Form einer Flüssigkeit, z.B. als H₃PO₄ oder einer wässrigen Lösung.

In bevorzugten Ausführungsformen des erfindungsgemäßen Verfahrens wird zunächst in einem wässrigem Lösungsmittel die Li⁺-Quelle gelöst, dann werden die Fe²⁺-, die Mn²⁺- und die M²⁺-Quelle sowie die PO₄³⁻₋Quelle zugegeben und unter Inertgasatmosphäre gemischt. Anschließend erfolgt die Umsetzung unter hydrothermalen Bedingungen und bevorzugt unter Schutzgas.

Als Lithiumquelle wird erfindungsgemäß Li₂O LiCl, LiNO₃, LiOH oder Li₂CO₃, bevorzugt LiOH oder Li₂CO₃ verwendet.

Die Fe-Quelle ist bevorzugt ein Fe²⁺-Salz, insbesondere FeSO₄, FeCl₂, FeNO₃, Fe₃(PO₄)₂ oder ein Fe-Organylsalz.

Die Mn-Quelle ist bevorzugt ein in Wasser lösliches Mangan(II)salz wie Mangansulfat, Manganacetat, Manganoxalat, Manganchlorid, Mangannitrat, Manganhydroxid, Mangancarbonat usw.

Als PO₄³⁻-Quelle wird erfindungsgemäß bevorzugt Phosphorsäure, ein Metallphosphat, Hydrogenphosphat oder Dihydrogenphosphat verwendet.

Als Quelle für das zweiwertige Metallkation kommen insbesondere die entsprechenden Sulfate, insbesondere von Mg, Zn und Ca in Frage, oder die entsprechenden Halogenide, Nitrate, Acetate, Carboxylate.

Die Erfindung ist nachstehend anhand von Beispielen und Abbildungen näher erläutert, ohne dass diese als einschränkend verstanden werden sollen.

Es zeigen:
- Figur 1: Entladungskurven bei 1C für ein Lithium-Mangan-Eisenphosphat LiMn_{0,66}Fe_{0,33}PO₄ des Standes der Technik;
- Figur 2: Entladungskurven bei 1C für das erfindungsgemäße LiMn_{0,56}Fe₀,₃₃Mg_{0,10}PO₄;
- Figur 3: Entladungskurven bei 1C für das erfindungsgemäße LiMn_{0,56}Fe_{0,33}Zn_{0,10}PO₄;
- Figur 4: die Ladungskurven von Lithium-Mangan-Eisenphosphat (LiMn₀,₆₆Fe₀,₃₃PO₄) des Standes der Technik;
- Figur 5: die Ladungskurven von erfindungsgemäßen LiMn_{0,56}Fe_{0,33}Zn_{0,10}PO₄;
- Figur 6: die Entladekurven bei verschiedenen Raten für eine Elektrode enthaltend erfindungsgemäßes LiMn_{0,56}Fe_{0,33}Zn_{0,10}PO₄;
- Figur 7: die Entladekurven bei verschiedenen Raten für eine Elektrode enthaltend LiMn_{0,66}Fe_{0,33}PO₄ des Standes der Technik;
- Figur 8a-b: der Vergleich der erfindungsgemäßen Materialien mit LiFePO₄ in Vollzellen gegen eine Lithium-Titanat Anode, bei C/10 (Figur 8a) und bei 20C (Figur 8a)
- Figur 9: der Vergleich der spezifischen Entladungskapazität bei C/10 zwischen einem Lithium-Mangan-Eisenphosphat (LiMn_{0,66}Fe_{0,33}PO₄) des Standes der Technik mit erfindungsgemäßen substituierten Lithium-Mangan-Metallphosphaten;
- Figur 10: Spannungsprofile bei 1C nach Alterung von erfindungsgemäßen Materialien gegenüber Lithium-Mangan-Eisenphosphat (LiMn_{0,66}Fe_{0,}33PO₄) des Standes der Technik;
- Fig. 11a-c: den Einfluss der Elektrodendichte auf die Entladungsrate bei erfindungsgemäßem Material,
- Fig. 12a-c: den Einfluss der Elektrodendichte bei einer Kathode enthaltend das erfindungsgemäße Material;
- Fig. 13: die Entladungskurve bei C/10 für erfindungsgemäßes LiMn_{0,80}Fe_{0,10}Zn_{0,10}PO_{4;}
- Fig. 14: die Entladungskurve bei C/10 für erfindungsgemäßes LiMn_{0,85}Fe_{0,10}Zn_{0,05}PO₄.

### Ausführungsbeispiele

### 1. Bestimmung der Teilchengrößenverteilung:

Die Teilchengrößenverteilungen für die Mischungen bzw. Suspensionen und des hergestellten Materials wird anhand der Lichtstreuungsmethode unter Verwendung handelsüblicher Vorrichtungen bestimmt. Diese Methode ist dem Fachmann an sich bekannt, wobei auch insbesondere auf die Offenbarung in der JP 2002-151082 und der WO 02/083555 verwiesen wird. Vorliegend wurden die Teilchengrößenverteilungen mit Hilfe eines Laserbeugungsmessgerätes (Mastersizer S, Firma Malvern Instruments GmbH, Herrenberg, DE) und der Software des Herstellers (Version 2.19) mit einem Malvern Small Volume Sample Dispersion Unit, DIF 2002 als Messeinheit bestimmt. Es wurden folgende Messbedingungen gewählt: Compressed range; active beam length 2,4 mm; Messbereich: 300 RF; 0,05 bis 900 µm. Die Probenvorbereitung und -messung erfolgte nach den Herstellerangaben.

Der D₉₀-Wert gibt den Wert an, bei dem 90 % der Teilchen in der gemessenen Probe einen kleineren oder gleichen Teilchendurchmesser aufweisen. Entsprechend geben der D₅₀-Wert bzw. der D₁₀-Wert den Wert an, bei dem 50 % bzw. 10 % der Teilchen in der gemessenen Probe einen kleineren oder gleichen Teilchendurchmesser aufweisen.

Nach einer besonders bevorzugten erfindungsgemäßen Ausführungsform gelten die in der vorliegenden Beschreibung genannten Werte für die D₁₀-Werte, D₅₀-Werte, die D₉₀-Werte sowie die Differenz der D₉₀- und der D₁₀-Werte bezogen auf den Volumenanteil der jeweiligen Teilchen am Gesamtvolumen. Danach geben die hier genannten D₁₀-, D₅₀- und D₉₀-Werte nach dieser erfindungsgemäßen Ausführungsform diejenigen Werte an, bei dem 10 Volumen-% bzw. 50 Volumen-% bzw. 90 Volumen-% der Teilchen in der gemessenen Probe einen kleineren oder gleichen Teilchendurchmesser aufweisen. Bei der Einhaltung dieser Werte werden erfindungsgemäß besonders vorteilhafte Materialien bereitgestellt und negative Einflüsse von relativ groben Teilchen (mit verhältnismäßig größerem Volumenanteil) auf die Verarbeitbarkeit und die elektrochemischen Produkteigenschaften vermieden. Besonders bevorzugt gelten die in der vorliegenden Beschreibung genannten Werte für die D₁₀-Werte, die D₅₀-Werte, die D₉₀-Werte sowie die Differenz der D₉₀- und der D₁₀-Werte sowohl bezogen auf Prozent als auch Volumenprozent der Teilchen.

Bei Zusammensetzungen (z.B. Elektrodenmaterialien), die neben den erfindungsgemäßen mit zweiwertigen Metallkationen substituierte Lithium-Mangan-Eisenphosphate weitere Komponenten enthalten, insbesondere bei kohlehaltigen Zusammensetzungen, kann die vorstehende Lichtstreuungsmethode zu irreführenden Ergebnissen führen, da die LiFeₓMn_{1-x-y}M_{y}PO₄-Teilchen (Partikel) durch das zusätzliche (z.B. kohlehaltige) Material zu größeren Agglomeraten verbunden sein können. Die Teilchengrößenverteilung des erfindungsgemäßen Materials bei solchen Zusammensetzungen kann jedoch anhand von REM-Aufnahmen wie folgt bestimmt werden:
Eine kleine Menge der Pulverprobe wird in Aceton suspendiert und für 10 Minuten mit Ultraschall dispergiert. Sofort danach werden einige Tropfen der Suspension auf einen Probenteller eines Rasterelektronenmikroskops (REM) getropft. Die Feststoffkonzentration der Suspension und die Anzahl der Tropfen werden so bemessen, dass sich eine weitgehend einlagige Schicht aus Pulverpartikeln (der Ausdruck "Partikel" wird auch synonym zu "Teilchen" verwendet) auf dem Träger ausbildet, um ein gegenseitiges Verdecken der Pulverpartikel zu verhindern. Das Auftropfen muss rasch erfolgen, bevor sich die Partikel durch Sedimentation nach der Größe trennen können. Nach Trocknen an Luft wird die Probe in die Messkammer des REM überführt. Im vorliegenden Beispiel handelt es sich um ein Gerät des Typs LEO 1530, das mit einer Feldemissionselektrode bei 1,5 kV Anregungsspannung und einem Probenabstand von 4 mm betrieben wird. Von der Probe werden mindestens 20 zufällig gelegte Ausschnittsvergrößerungen mit einem Vergrößerungsfaktor von 20.000 aufgenommen. Diese werden jeweils auf einem DIN A4-Blatt mitsamt dem eingeblendeten Vergrößerungsmaßstab ausgedruckt. Auf jedem der mindestens 20 Blätter werden nach Möglichkeit mindestens 10 freie sichtbare Partikel des erfindungsgemäßen Materials, aus denen die Pulverpartikel zusammen mit dem kohlenstoffhaltigen Material aufgebaut sind zufällig ausgewählt, wobei die Umgrenzung der Partikel des erfindungsgemäßen Materials durch das Fehlen fester, direkter Verwachsungsbrücken definiert sind. Verbrückungen durch Kohlenstoffmaterial hingegen werden zur Partikelgrenze gezählt. Von jedem dieser ausgewählten Partikel wird jeweils die in der Projektion längste und kürzeste Achse mit einem Lineal abgemessen und anhand des Maßstabsverhältnisses auf die realen Partikelabmessungen umgerechnet. Für jedes ausgemessene LiFeₓMn_{1-x-y}M_{y}PO₄-Partikel wird der arithmetische Mittelwert aus der längsten und der kürzesten Achse als Partikeldurchmesser definiert. Anschließend teilt man die ausgemessenen LiFeₓMn_{1-x-y}M_{y}PO₄-Partikel in Analogie zur Lichtstreuungsmessung in Größenklassen ein. Trägt man die Anzahl der jeweils zugehörigen Partikel über der Größenklasse auf, erhält man differentielle Partikelgrößenverteilung bezogen auf die Partikelanzahl. Werden die Partikelzahlen fortlaufend den kleinen zu den großen Partikelklassen hin aufsummiert, erhält man die kumulierte Partikelgrößenverteilung, aus der D₁₀, D₅₀ und D₉₀ auf der Größenachse direkt abgelesen werden können. Das beschriebene Verfahren findet auch Anwendung auf das erfindungsgemäße Material enthaltende Batterieelektroden. In diesem Fall wird jedoch statt einer Pulverprobe eine frische Schnitt- oder Bruchfläche der Elektrode auf den Probenträger befestigt und in REM untersucht.

### Beispiel 1: Herstellung von LiMn_{0,56}Fe_{0,33}Zn_{0,10}PO₄ nach dem erfindungsgemäßen Verfahren

Bei der Herstellung des Materials ist zu beachten, dass das Material aus einer wässrigen Fe²⁺-Precursorlösung gefällt wird. Die Umsetzung und Trocknung/Sinterung ist daher bevorzugt unter Schutzgas oder Vakuum durchzuführen, um eine teilweise Oxidation von Fe²⁺ zu Fe³⁺ unter Bildung von Nebenprodukten wie Fe₂O₃ oder FePO₄ zu vermeiden.

### Herstellung und Fällung/Suspension einer Vorläufermischung

Zuerst wurden 105,5 g Lithiumhydroxid LiOH · H₂O in 0,9 1 destilliertem Wasser gelöst. Diese Lösung wird basische Lösung genannt.

77, 43 g FeSO₄ x 7 H₂O, 79,88 g MnSO₄ x H₂O und 24,27 g ZnSO₄ x 7 H₂O wurden in ca. 1,5 1 destilliertem Wasser gelöst und langsam unter Rühren 103,38 g 80 %ige Phosphorsäure zugegeben. 0,4 1 destilliertes Waschwasser wurde zugegeben. Diese Lösung wird saure Lösung genannt.

Die basische Lösung wurde im Laborautoklaven (Volumen: 4 Liter) bei 600 UPM Rührergeschwindigkeit vorgelegt, der Autoklav über das Tauchrohr mit ca. 6 - 7 bar Stickstoff beaufschlagt und über das Entlüftungsventil wieder entspannt. Die Prozedur wurde dreimal wiederholt.

Am Autoklaven wurde zur Durchführung der Dispergier- oder Mahlbehandlung ein Dispergator (Firma IKA, ULTRATURRAX® UTL 25 Basic Inline mit Dispergierkammer DK 25.11) zwischen Entlüftungsventil und Bodenablassventil angeschlossen. Die Pumprichtung des Dispergators war Bodenablassventil - Dispergator - Entlüftungsventil. Der Dispergator wurde auf mittlere Leistungsstufe (13.500 UPM) nach den Angaben des Herstellers gestartet.

Anschließend wurde die vorbereitete saure Lösung mit einer Membranpumpe über das Tauchrohr in den Autoklaven gepumpt (Hub 100 %, 180 Hübe/Minute; entspricht höchster Leistung der Pumpe) und mit ca. 500 bis 600 ml destilliertem Wasser nachgespült. Das Zupumpen dauerte etwa 20 Minuten, wobei die Temperatur der entstandenen Suspension auf ca. 40°C stieg. Nach Zupumpen der sauren Lösung fiel ein Niederschlag aus.

Der Dispergator, der vor Beginn der sauren Lösung-Zugabe gestartet wurde, wurde insgesamt etwa 1 Stunde zur Intensivmischung bzw. Vermahlung der entstandenen, viskosen Suspension eingesetzt (nach Zupumpen der sauren Lösung bei 50°C) .

Der Einsatz eines Dispergators bewirkt eine Intensivmischung und die Agglomerierung der gefällten viskosen Vormischung. Bei der dabei ablaufenden Fällung und Kristallisation der Suspension entstand durch die Vorvermahlung bzw. Intensivvermischung im Dispergator eine homogene Mischung aus vielen kleinen, etwa gleich großen Kristallkeimen. Diese Kristallkeime kristallisierten bei der anschließenden Hydrothermalbehandlung (siehe unten) zu sehr gleichmäßig gewachsenen Kristallen des Endprodukts mit einer sehr engen Partikelgrößenverteilung. Der Leistungs- bzw. Energieeintrag über die Dispergierbehandlung lag bei mehr als 7 kW/m³ bzw. mehr als 7 kWh/m³ der behandelten Precursormischung/Suspension.

### Hydrothermalbehandlung

Die jeweils frisch hergestellte Suspension wurde im Laborautoklaven hydrothermal behandelt. Vor dem Aufheizen der Suspension wurde der Autoklav mit Stickstoff gespült, um vorhandene Luft vor dem Hydrothermalprozess aus dem Autoklaven zu verdrängen. Das erfindungsgemäße Produkt bildete sich ab Hydrothermaltemperaturen von etwa 100 bis 120°C. Bevorzugt wurde die Hydrothermalbehandlung bei 130°C für 2 Stunden durchgeführt.

Nach Abschalten und Abklemmen des Dispergators wurde der Ansatz in 1,5 Stunden auf 130°C für 2 Stunden erhitzt. Anschließend wurde in 3 Stunden auf 30°C abgekühlt.

Danach konnte das erfindungsgemäße *LiMn_{0,56}Fe_{0,33}Zn_{0,10}PO₄* ohne sichtbare Oxidation an Luft oder im Trockenschrank zum Beispiel bei milden Temperaturen (40°C) getrocknet werden.

Das so gewonnene Material wurde unter Stickstoffatmosphäre durch das Bodenablassventil des Autoklaven in einen Druckfilter gepumpt (Seitz-Filter). Dabei wurde die Membranpumpe so eingestellt, dass ein Druck von 5 bar nicht überschritten wurde. Der Filterkuchen wurde so lange mit destilliertem Wasser nachgewaschen, bis die Leitfähigkeit des Waschwassers 42 µS/cm unterschritten hatte.

### Beispiel 2: Darstellung von LiMn_{0,56}Fe_{0,33}Mg_{0,10}PO₄

Die Synthese wurde wie in Beispiel 1 durchgeführt, nur wurde anstelle von ZnSO₄ 20,80 g MgSO₄*7 H₂O als Ausgangsmaterial in den entsprechenden molaren Gewichtsmengen verwendet.

### Beispiel 3: Herstellung von LiMn_{0,80}Fe_{0,33}Zn_{0,10}PO₄ nach dem erfindungsgemäßen Verfahren

Die Synthese wurde wie in Beispiel 1 durchgeführt, nur wurden 114, 12 g MnSO₄*1 1 H₂O, 23,46 g FeSO₄*7 H₂O, 24,27 g ZnSO₄*7 H₂O, 103,38 g H₃PO₄, (80%) als Ausgangsmaterialien in den entsprechenden molaren Gewichtsmengen verwendet.

### Beispiel 4: Herstellung von LiMn_{0,85}Fe_{0,10}Zn_{0,05}PO₄ nach dem erfindungsgemäßen Verfahren

Die Synthese wurde wie in Beispiel 1 durchgeführt, nur wurden 121,26 g MnSO₄*1 H₂O, 23, 46 g FeSO₄*7 H₂O, 12, 14 g ZnSO₄*7 H₂O, 103,38 g H₃PO₄ (80 %) als Ausgangsmaterialien in den entsprechenden molaren Gewichtsmengen verwendet.

### Beispiel 5 Kohlenstoffbeschichtung des erhaltenen Materials (Variante 1)

Die in dem Beispiel 1 bis 4 gewonnenen Filterkuchen wurden mit einer Lösung von 24 g Laktose in Wasser imprägniert und anschließend bei 750°C für 3 Stunden unter Stickstoff kalziniert.

Je nach Menge der Laktose lag der Kohlenstoffanteil des erfindungsgemäßen Produkts zwischen 0,2 bis 4 Gew.-%. Typischerweise wurde 1 kg trockenes Produkt aus den Beispielen 1 und 2 mit 112 g Laktosemonohydrat und 330 g deionisiertem Wasser innig vermengt und über Nacht im Vakuumtrockenschrank bei 105°C und < 100 mbar auf eine Restfeuchte von 3 % getrocknet. Das sprödharte Trocknungsprodukt wurde von Hand gebrochen und in einer Scheibenmühle (Fritsch Pulverisette 13) mit einem 1 mm Scheibenabstand grob gemahlen und in Edelstahltiegeln in einen Schutzgaskammerofen (Linn KS 80-S) überführt. Dieser wurde bei einem Stickstoffstrom von 200 1/h innerhalb von 3 Stunden auf 750°C aufgeheizt, für 3 Stunden auf dieser Temperatur gehalten und in 3 Stunden auf Raumtemperatur abgekühlt. Das kohlenstoffhaltige Produkt wurde in einer Jetmühle (Hosokawa) deagglomeriert.

Die REM-Analyse der Teilchengrößenverteilung ergab folgende Werte: D₅₀ < 0,5 µm, Differenz zwischen D₉₀- und D₁₀-Wert: < 1 µm.

### Beispiel 6: Kohlenstoffbeschichtung des erfindungsgemäßen Materials (variante 2)

Die Synthese der erfindungsgemäßen Materialien erfolgte wie in den Beispielen 1 bis 4, nur wurde während des Fällungsschritts a) noch anschließend Gelatine (9 g Gelatine je 100 g Ausgangsprodukt) zugegeben. Das Endprodukt enthielt ca. 2,3 Gew.-% Kohlenstoff.

### Beispiel 7: Herstellung von Elektroden

Es wurden Dünnfilmelektroden hergestellt, wie sie beispielsweise in Anderson et al., Electrochem. and Solid State Letters 3 (2) 2000, Seiten 66-68 offenbart sind. Die Elektrodenzusammensetzungen bestanden üblicherweise aus 90 Gewichtsteilen Aktivmaterial, 5 Gewichtsteilen Super P Kohlenstoff und 5 % Polyvinylidenfluorid als Binder bzw. 80 Gewichtsanteilen Aktivmaterial, 15 Gew.-% Super P Kohlenstoff und 5 Gewichtsteile Polyvinylidenfluorid, oder 95 Gewichtsanteilen Aktivmaterial und 5 Gewichtsanteilen Polyvinylidenfluorid.

Das Aktivmaterial wurde zusammen mit dem Binder (bzw. für die Elektroden des Standes mit dem Leitmittelzusatz) in N-Methylpyrrolidon gemischt, auf eine vorbehandelte (Primer) Aluminiumfolie mittels einer Rakel aufgetragen und das N-Methylpyrrolidon bei 105°C unter Vakuum verdampft. Anschließend wurden die Elektroden ausgeschnitten (13 mm Durchmesser) und mit einer Walze bei Raumtemperatur gewalzt. Man begann bei einer Spaltbreite z.B. 0,1 mm und tastete sich mit 5-10µm - Schritten auf die gewünschte Dicke vor. Dabei wurde bei jeder Stufe 4x gewalzt und die Folie um 180° gedreht. Nach dieser Behandlung lag die Dicke der Beschichtung zwischen 20-25µm. Der Primer auf der Aluminiumfolie bestand aus einer dünnen Kohlenstoffbeschichtung, die die Haftung des Aktivmaterials verbessert, besonders wenn der Aktivmaterialgehalt in der Elektrode über 85 wt.-% beträgt.

Die Elektroden wurden dann über Nacht bei 120°C unter Vakuum getrocknet und in einer argongefüllten Glovebox in Halbzellen gegen Lithiummetall verbaut und elektrochemisch vermessen. Die elektrochemischen Messungen wurden gegen Lithiummetall durchgeführt unter Verwendung von LP30 (Fa. Merck, Darmstadt) als Elektrolyt (EC (Ethylencarbonat):DMC (Dimethylcarbonat) = 1:1, 1 M L1PF₆).

Das Testverfahren wurde im CCCV-Modus durchgeführt, das heißt Zyklen bei einem konstanten Strom mit der C/10 Rate für den ersten und mit der C Rate für die nachfolgenden Zyklen. Bei den Spannungsgrenzen (1,0 und 2,0 Volt gegen Li/Li⁺) folgte in einigen Fällen ein konstanter Spannungsteil, bis der Strom ungefähr auf die C/50-Rate fiel, um den Ladungs-/Entladungszyklus zu vervollständigen.

Entsprechende Bestimmungen der spezifischen Kapazität und der Strombelastbarkeit wurden sowohl an LiMn_{0,66}Fe_{0,33}PO₄ des Standes der Technik sowie an erfindungsgemäßen mit Magnesium und Zink substituierten Materialien hergestellt. Ebenso wurden auch LiFePO₄ (erhältlich von der Firma Süd-Chemie) Elektroden vermessen.

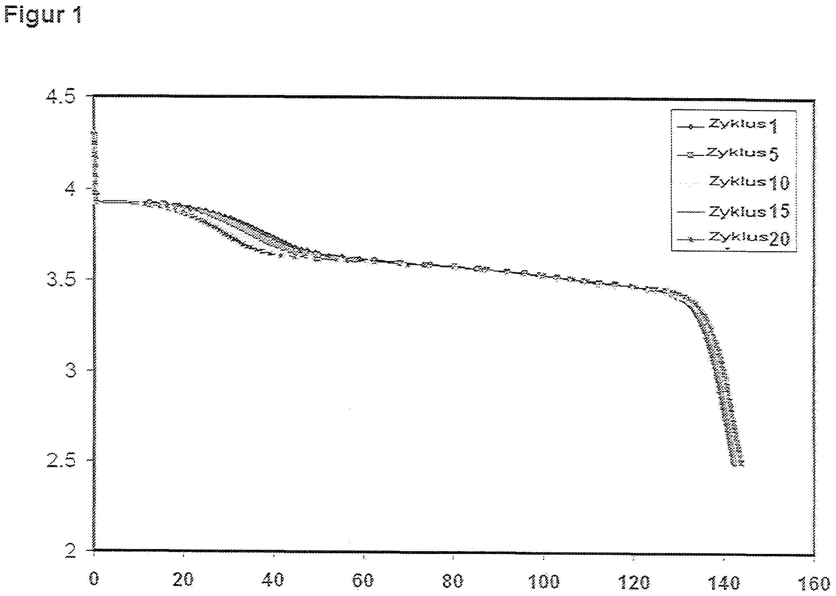

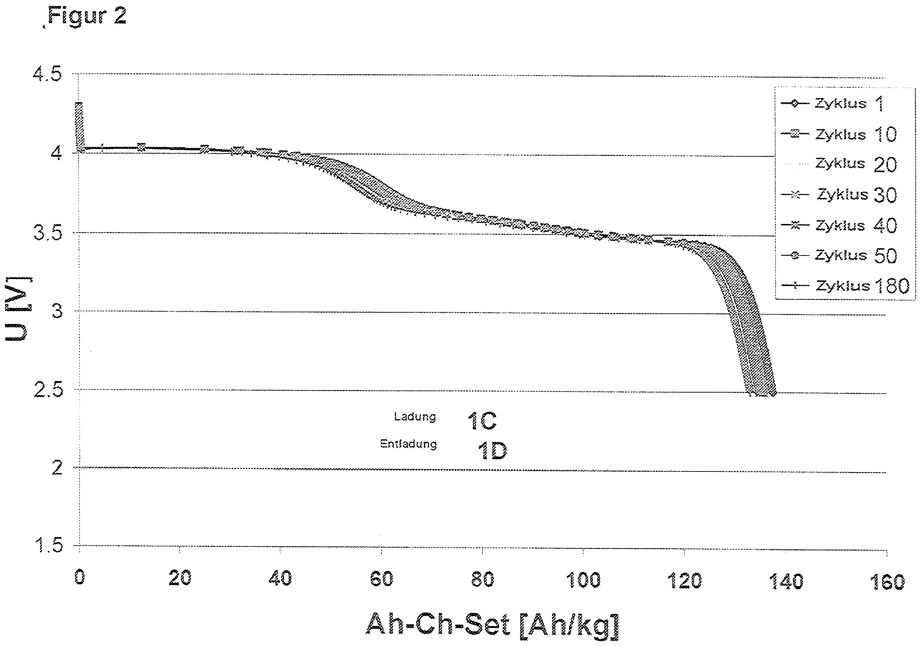

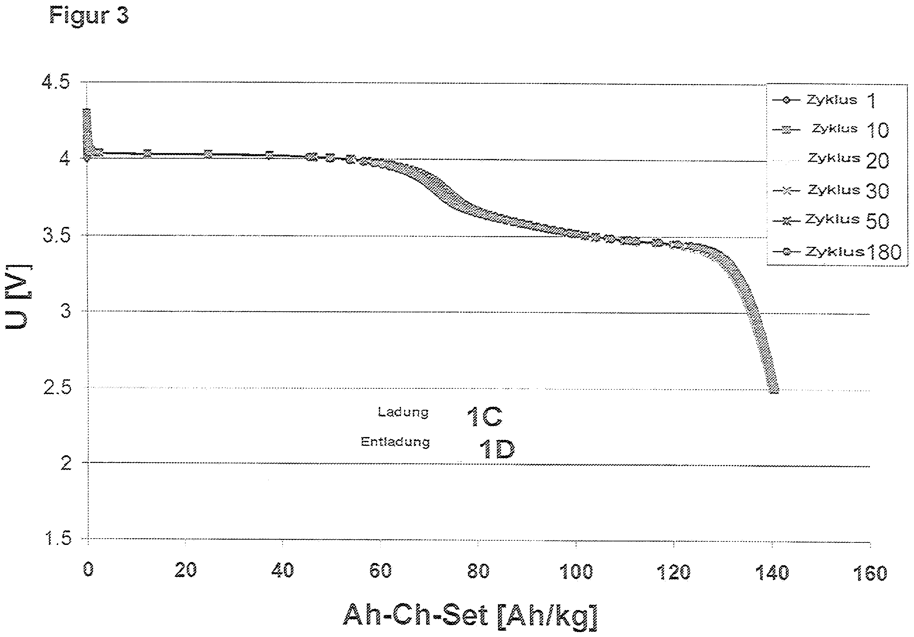

Figur 1 zeigt die Entladungskurven bei 1C für ein LiMn_{0,66}Fe_{0,33}PO₄ des Standes der Technik.
Nach mehreren Zyklen ist ein Energieverlust im Bereich zwischen 20 und 40 mAh/g festzustellen. Demgegenüber zeigen die erfindungsgemäßen Magnesium- und Zink-substituierten Materialien (Fig. 2 und 3) im Bereich zwischen 20 und 60 mAh/g fast keinen Energieverlust auch nach 180 Zyklen. Ebenso ist auch nach längeren Zyklen kein Schwächerwerden der Kapazität bei 140 mAh/g festzustellen.

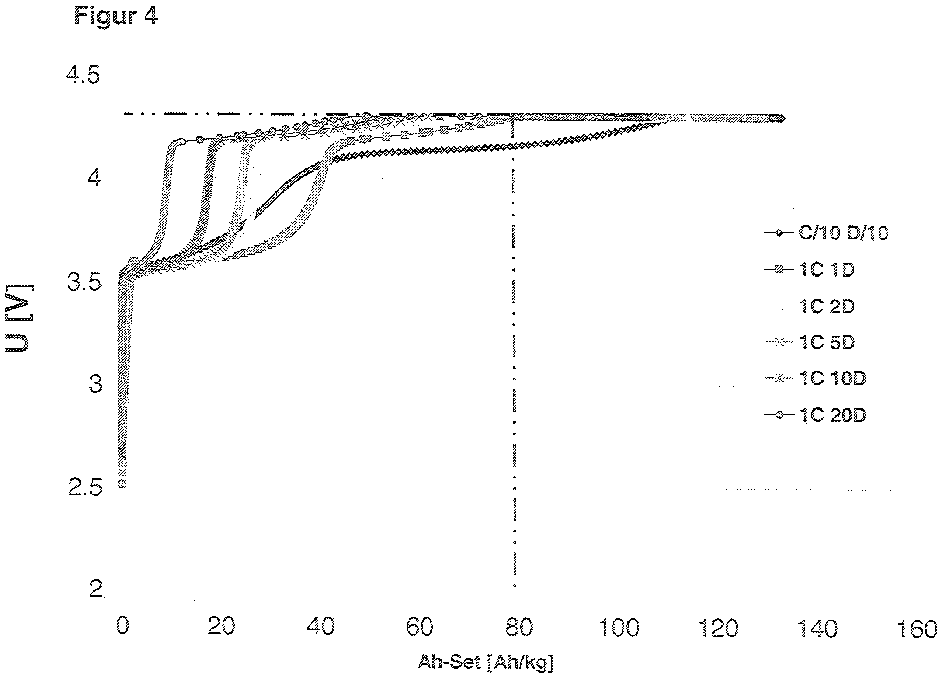

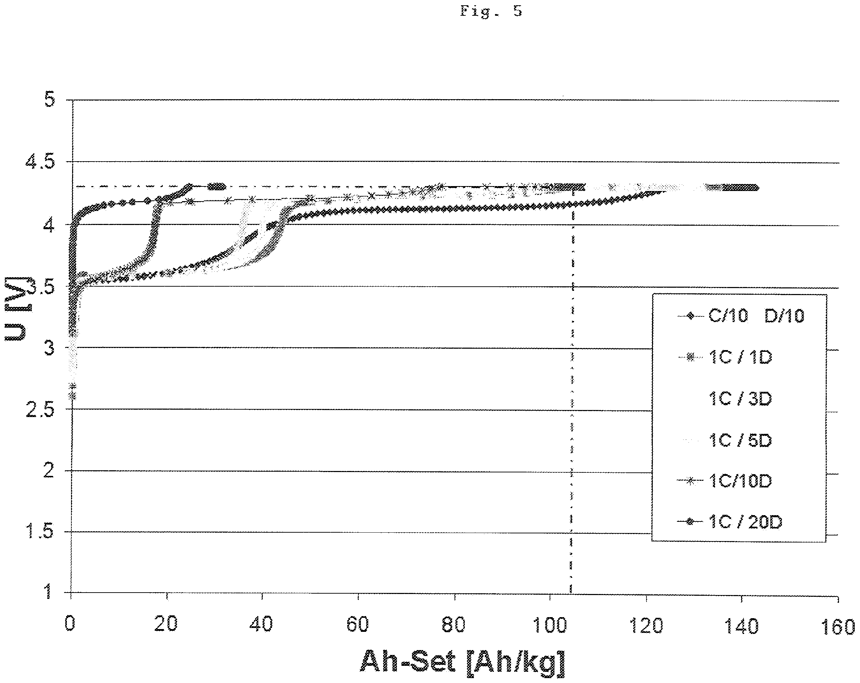

Figur 4 zeigt Ladungskurven eines LiMn_{0,66}Fe_{0,33}PO₄ Material des Standes der Technik mit einer Elektrodendichte von 1,2 g/cm³ und einer Dicke von 20 µm. Im Vergleich dazu ist die Ladungskurve für das zinkhaltige erfindungsgemäße Material in Figur 5 gezeigt. Wie aus den Figuren 4 und 5 ersichtlich ist, ist der 1C-Wert des erfindungsgemäßen Materials bei der Ladung bis 4,3V deutlich besser als bei dem Vergleichsmaterial des Standes der Technik.

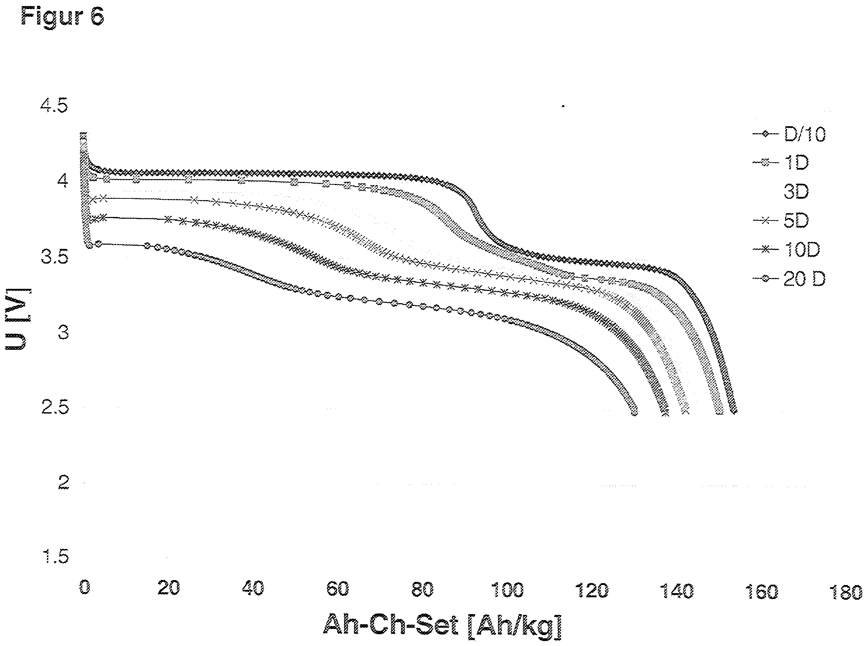

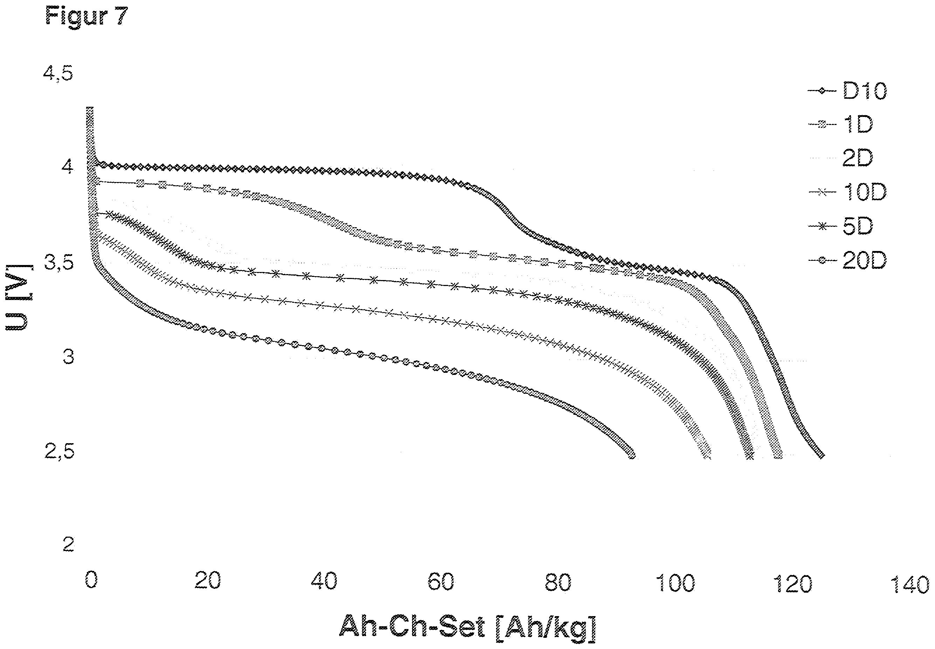

Die Figuren 6 und 7 zeigen die Entladungskapazität bei verschiedenen Raten des erfindungsgemäßen Materials (Fig. 6) sowie eines Lithium-Mangan-Eisenphosphats des Standes der Technik (Figur 7). Die Elektrodendichte betrug beim erfindungsgemäßen Material 1,2 g/cm³ und beim Vergleichsmaterial 1,3 g/cm³ bei einer Dicke von ca. 20 µm.

Auch hier zeigt sich gegenüber dem nicht mit einem zweiwertigen Metallion substituierten Lithium-Mangan-Eisenphosphat nach mehreren Entladungszyklen ein erheblicher Leistungsabfall des nicht mit (elektrisch inaktiven) zweiwertigen Materialien substituierten Lithium-Mangan-Eisenphosphats. Außerdem ist die Polarisation bei erhöhten Stromraten für das Lithium-Mangan-Eisenphosphat des Standes der Technik deutlich größer als bei einem erfindungsgemäßen substituierten Lithium-Mangan-Eisenphosphat.

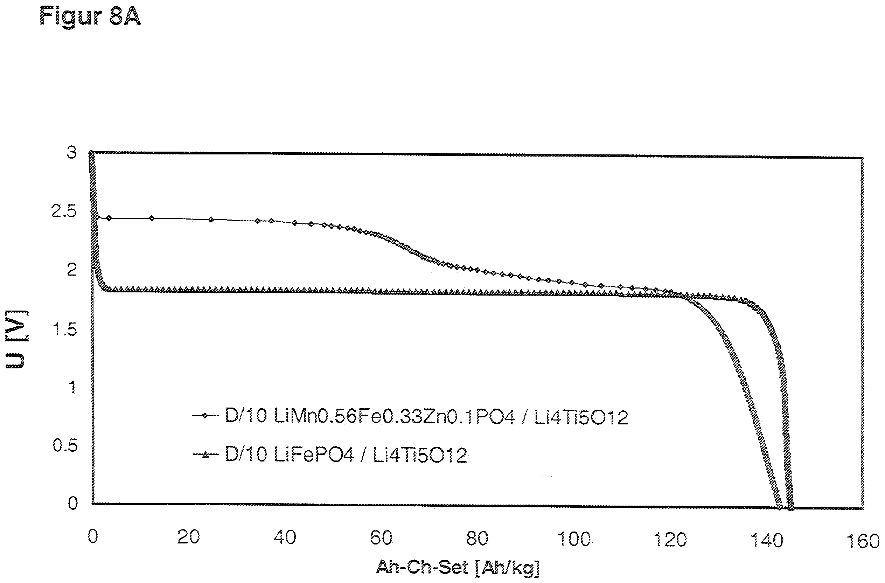

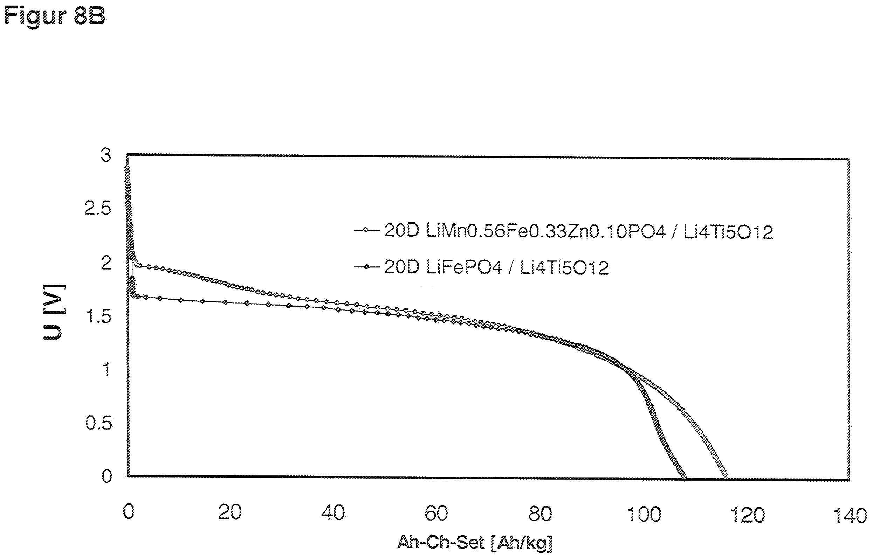

Figur 8a - b zeigt die Entladungskurven in Vollzellenkonfiguration gegen eine Lithium-Titanat (Li₄Ti₅O₁₂) Anode bei D/10 und bei 20D für ein mit Kohlenstoff beschichtetes Lithium-Eisenphosphat des Standes der Technik (erhältlich von der Firma Süd Chemie) und für das erfindungsgemäße LiMn_{0,56}Fe_{0,33}Zn_{0,10}PO₄ Material. Die Elektrodenzusammensetzung betrug 90 Gew.-% aktives Material, 5 % Super P Graphit und 5 Gew.-% Polyvinylidenfluorid. Die Zelle war so balanciert, dass die Masse der Kathode und die Masse der Anode so ähnlich wie möglich waren.

Hier zeigt sich, dass das erfindungsgemäße LiMn_{0,56}Fe_{0,33}Zn_{0,1}PO₄ Material ein langes 4 Volt Plateau bis 80 mAh/g und gleichzeitig eine vergleichbare spezifische Entladungskapazität bei D/10 aufweist als das (mit Kohlenstoff beschichtete) Lithium-Eisenphosphat des Standes der Technik, was eine deutliche Erhöhung der Energiedichte gegenüber Lithium-Eisenphosphat bedeutet.

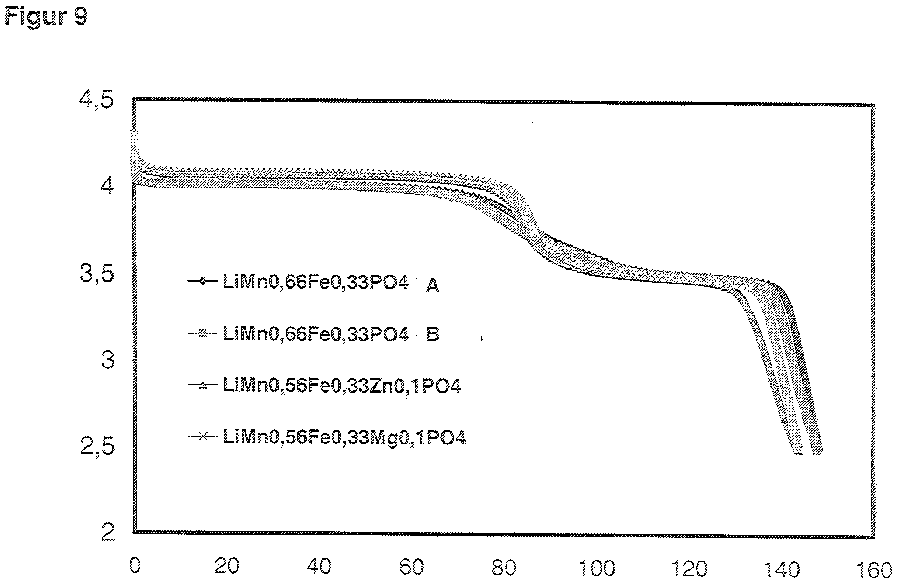

Figur 9 zeigt die C/10- bzw. Entladungskapazität erfindungsgemäßer LiMn_{0,56}Fe_{0,33}Zn_{0,1}PO₄ und LiMn_{0,56}Fe_{0,33}Mg_{0,10}PO₄ Materialien verglichen mit zwei LiMn_{0,66}Fe_{0,33}PO₄ Materialien des Standes der Technik. Auch hier ist überraschenderweise zu sehen, dass eine Vergrößerung des Mangan-Plateau-Potentials durch Zink und Magnesiumsubstitutionen erzielt wird, obwohl in diesen Fällen Mg und Zink elektrisch inaktive Ionen sind und der Mangan-Gehalt kleiner als bei den Materialien der Stand der Technik ist.

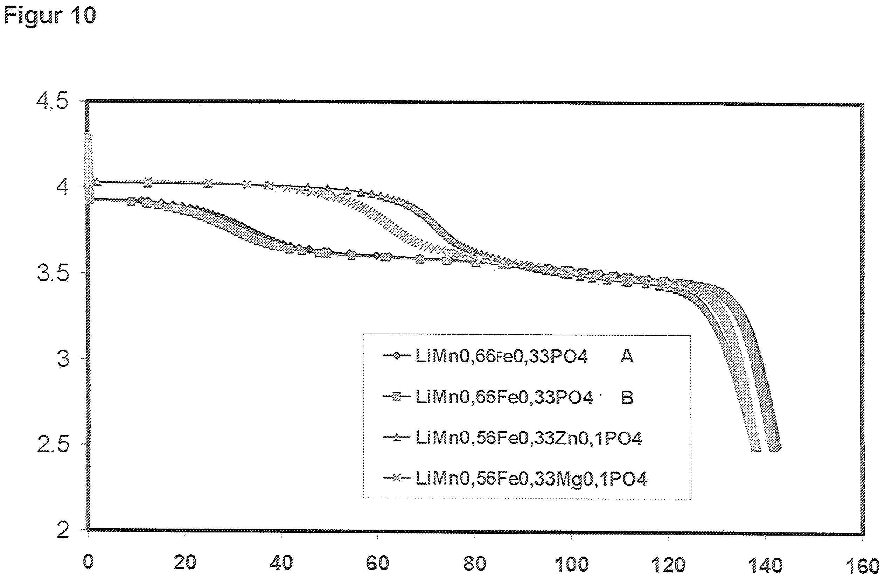

Die Ladungs- und Entladungszyklen wurden nach 20 Zyklen bei C/10 und bei 1D für die erfindungsgemäßen LiMn_{0,56}Fe_{0,33}Zn_{0,10}PO₄ und LiMn_{0,56}Fe_{0,33}Mg_{0,10}PO₄ Materialien und für Lithium-Mangan-Eisenphosphate des Standes der Technik (Figur 10) vermessen. Auch hier zeigt sich eine Stabilisierung der Länge des 4-Volt-Mangan-Plateaus durch die erfindungsgemäßen Materialien, verglichen mit Lithium-Mangan-Eisenphosphat des Standes der Technik.

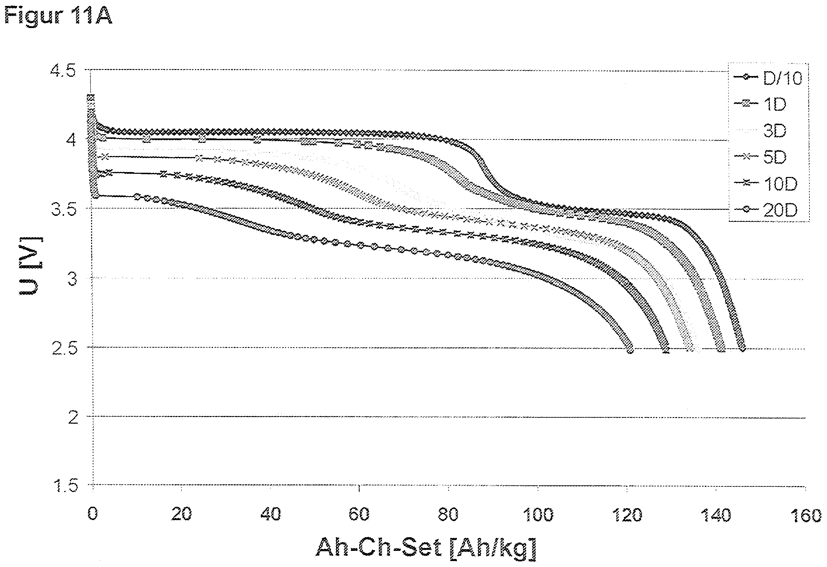

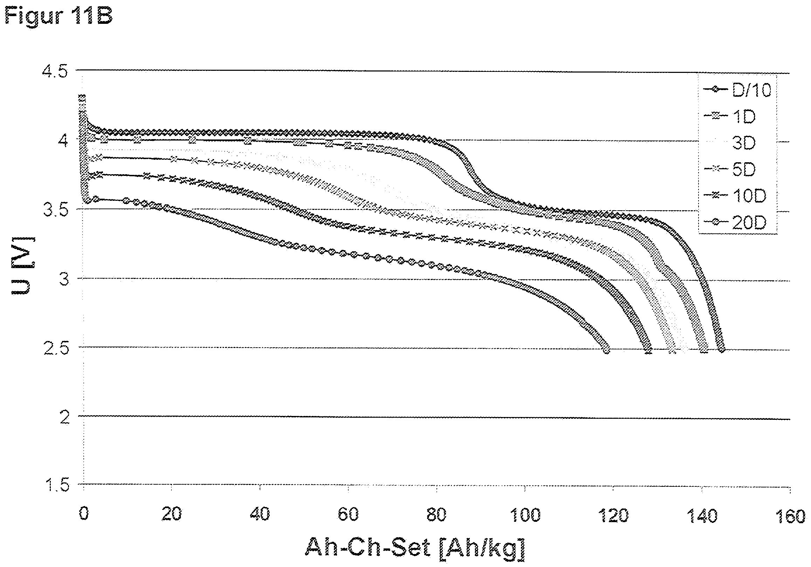

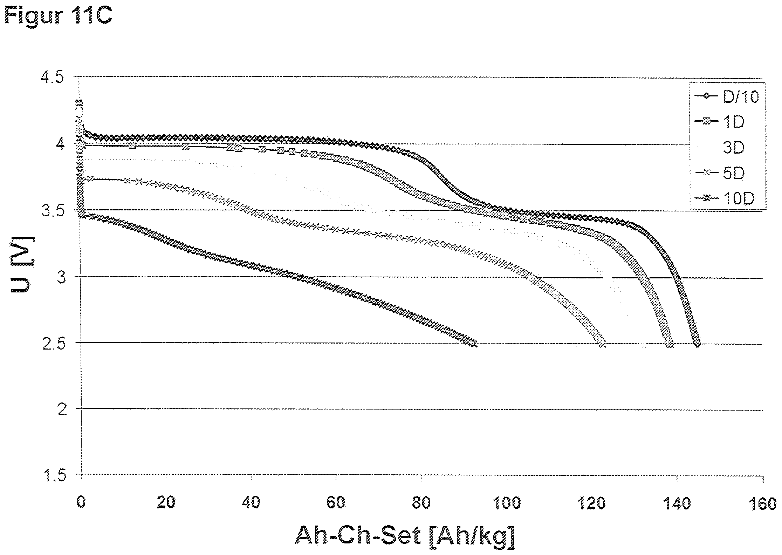

Figuren 11a bis c zeigen die Variation der Elektrodendichte auf die Entladungskapazitäten bei verschiedenen Raten. In Figur 11a beträgt die Dichte des Materials 1,6 g/cm³, in Figur 11b 1,7 g/cm³ und in Figur 11c 2,0 g/cm³.

Es zeigt sich, dass es mit den erfindungsgemäßen Materialien möglich ist, die Elektrodendichte unter Beibehaltung der Entladungskapazitäten zu erhöhen.

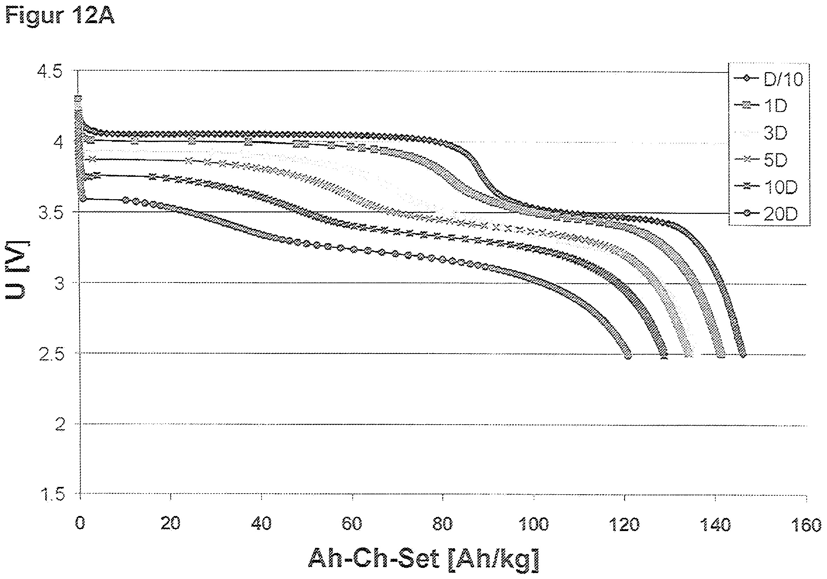

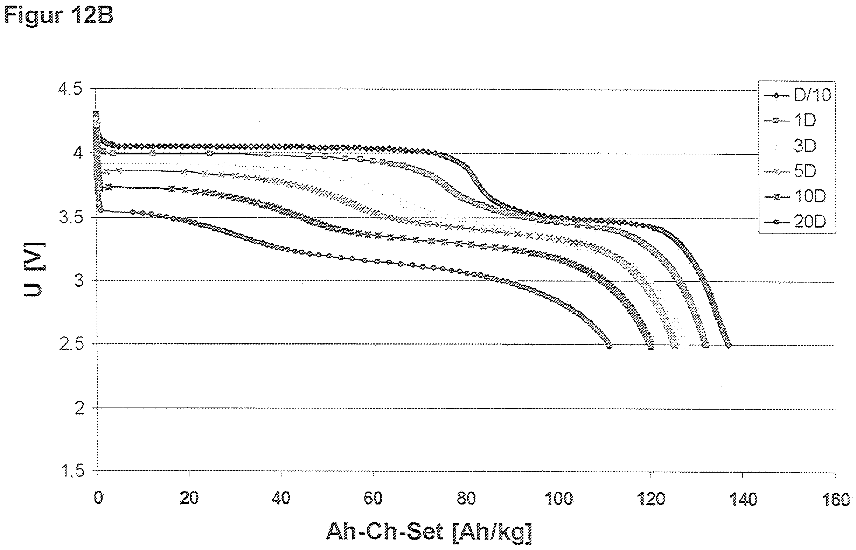

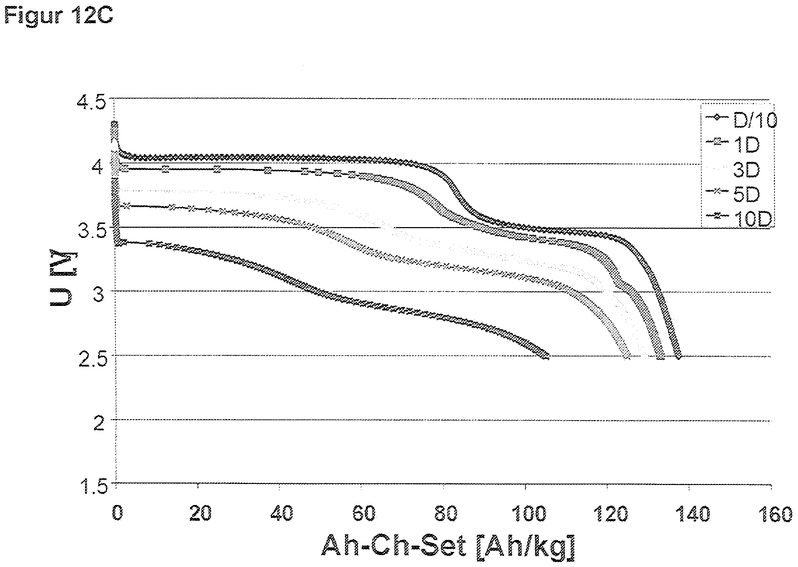

Die Figuren 12a bis c zeigen den Einfluss der Elektrodendicke auf die Entladungskapazitäten. Die Dicke der Elektroden in Figur 12a betrug 25 µm, in Figur 12b 33 µm und in Figur 12c 51 µm. Es zeigt sich hier auch, dass das Plateau bei 4 Volt und die Entladungskapazität mindestens bis 5C beibehalten werden kann, und gleichzeitig die Beladung mit Aktivmasse erhöht werden kann.

Noch höhere Energiedichten können erreicht werden, indem der Mangangehalt in diesen erfindungsmäßigen substituierten Materialien erhöht wird.

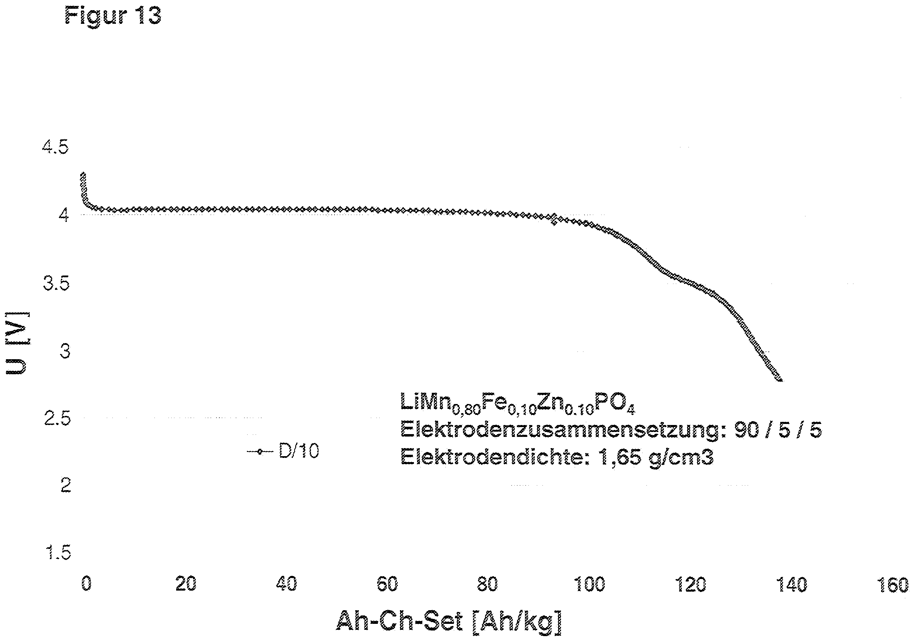

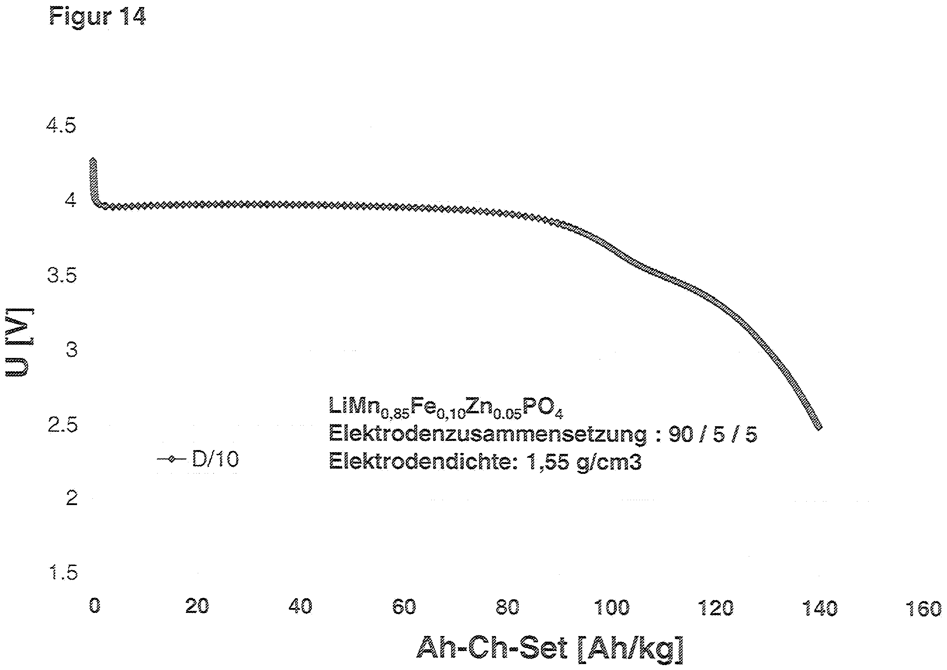

Die Figuren 13 und 14 zeigen die Entladungskapazität bei D/10 der erfindungsgemäßen LiMn_{0,80}Fe_{0,33}Zn_{0,10}PO₄ und
LiMn_{0,85}Fe_{0,33}Zn_{0,05}PO₄ Materialien (hergestellt gemäß Beispiel 2 und 4). Es zeigt sich, dass das 4V Mangan-Plateau noch länger als bei erfindungsgemäßem LiMn_{0,56}Fe_{0,33}Zn_{0,10}PO₄ ist.

Zusammengefasst stellt die vorliegende Erfindung mit zweiwertigen Metallionen substituierte gemischte Lithium-Mangan-Eisenphosphat-Materialien zur Verfügung, die mittels eines Hydrothermalprozesses hergestellt werden können. Die spezifische Entladungskapazität für Raumtemperatur überschreitet 140 mAh/g trotz der Substitution mit teilweise 10 % elektrochemisch inaktiven zweiwertigen Metallionen. Für sämtliche substituierten Materialien wurden sehr gute Entladungsraten gemessen.

Verglichen mit nicht substituierten LiMn_{0,66}Fe_{0,33}PO₄ zeigte sich, dass das Entladungsspannungsprofil bei 1 D für die zweiwertig substituierten neuen erfindungsgemäßen Materialien selbst nach mehreren Ladungs- und Entladungszyklen unverändert bleibt (die Länge des Mn-Plateaus bei 4 Volt blieb unverändert).

In Bezug auf die Energiedichte wurde gefunden, dass die Substitution mit Zink oder mit Magnesium verglichen mit Kupfer, Titan und Nickel die besten Ergebnisse ergab.

## Patentansprüche

1. Lithium-Mangan-Metallphosphat der Formel
LiFeₓMn_{1-x-y}M_{y}PO₄
bei dem M ein zweiwertiges Metall aus der Gruppe Zn, Ca und Cd ist und wobei gilt: x < 1, 0 < y < 0,15 und x + y < 1, oder bei dem M Mg ist und wobei gilt: 0,01 ≤ x ≤ 0,11, 0,07 < y < 0,2 und x + y < 0,2.

2. Lithium-Mangan-Metallphosphat nach Anspruch 1, bei dem M Zn oder Ca ist.

3. Lithium-Mangan-Metallphosphat nach einem der vorhergehenden Ansprüche, bei dem 0 < x < 0,35 ist, für den Fall, dass M aus der Gruppe Zn, Ca und Cd ist.

4. Lithium-Mangan-Metallphosphat nach einem der vorhergehenden Ansprüche weiter umfassend Kohlenstoff, wobei der Anteil an Kohlenstoff bezogen auf das Lithium-Mangan-Metallphosphat ≤ 4 Gew.-% beträgt.

5. Lithium-Mangan-Metallphosphat nach Anspruch 4, wobei der Kohlenstoff im gesamten substituierten Lithium-Mangan-Metallphosphat gleichmäßig verteilt ist.

6. Lithium-Mangan-Metallphosphat nach Anspruch 4 oder 5, wobei der Kohlenstoff die einzelnen Partikel des gemischten Lithium-Mangan-Metallphosphats bedeckt.

7. Kathode für eine Sekundärlithiumionenbatterie enthaltend ein Lithium-Mangan-Metallphosphat nach einem der Ansprüche 1 bis 6.

8. Kathode nach Anspruch 7, enthaltend eine weitere Lithium-Metall-Sauerstoff-Verbindung, ausgewählt aus der Gruppe LiCoO₂, LiMn₂O₄, LiNiO₂, LiCoPO₄, LiFePO₄, LiMnPO₄ und LiMnFePO₄ sowie Mischungen davon.

9. Kathode nach einem der Ansprüche 7 oder 8, die leitmittelzusatzfrei ist.

10. Verfahren zur Herstellung eines Lithium-Mangan-Metallphosphats nach einem der vorhergehenden Ansprüche 1 bis 6, umfassend die folgenden Schritte:
a. des Herstellens einer Mischung in wässriger Lösung, enthaltend mindestens eine Li-Ausgangsverbindung, eine Mn-Ausgangsverbindung, eine Fe-Ausgangsverbindung, eine M²⁺ Ausgangsverbindung und eine PO₄³⁻Ausgangsverbindung bis zur Bildung einer Suspension,
b. des Durchführens einer Dispergier- oder Mahlbehandlung der Mischung und/oder der Suspension,
c. des Gewinnens von LiFeₓMn_{1-x-y}M_{y}PO_{4,} wobei x und y die vorstehend genannten Bedeutungen aufweisen, aus der Suspension durch Umsetzung der Suspension unter hydrothermalen Bedingungen bei Temperaturen von 100 °C bis 200 °C sowie einem Druck von 1 bar bis 40 bar Dampfdruck.

11. Verfahren nach Anspruch 10, wobei in Schritt a) oder in Schritt c) eine weitere, Kohlenstoff enthaltende Komponente zugegeben wird.

12. Verfahren nach Anspruch 10, wobei das in Schritt c) erhaltene LiFeₓMn_{1-x-y}M_{y}PO₄ mit einer Kohlenstoff enthaltenden Komponente vermischt wird.

13. Verfahren nach einem der Ansprüche 10 bis 12, wobei anschließend ein Trocknungsschritt bei einer Temperatur von < 100°C und/oder ein Kalzinierungsschritt bei einer Temperatur von mehr als 200°C durchgeführt wird.

## Claims

1. Lithium manganese metal phosphate of the Formula
LiFeₓMn_{1-x-y}M_{y}PO₄
wherein in that M is a divalent metal from the group Zn, Ca and Cd and wherein: x < 1, 0 < y < 0.15 and x + y < 1, or wherein M is Mg and wherein: 0.01 ≤ x ≤ 0.11, 0.07 < y < 0.2 and x + y < 0.2.

2. Lithium manganese metal phosphate according to claim 1, wherein M is Zn or Ca.

3. Lithium manganese metal phosphate according to one of the preceding claims, wherein 0 < x < 0.35 for the case where M is from the group Zn, Ca and Cd.

4. Lithium manganese metal phosphate according to one of the preceding claims further comprising carbon, wherein the proportion of carbon, relative to the lithium manganese metal phosphate, is ≤ 4 wt %.

5. Lithium manganese metal phosphate according to claim 4, wherein the carbon is evenly dispersed in the whole of the substituted lithium manganese metal phosphate.

6. Lithium manganese metal phosphate according to claim 4 or 5, wherein the carbon covers the individual particles of the mixed lithium manganese metal phosphate.

7. Cathode for a secondary lithium ion battery comprising a lithium manganese metal phosphate according to one of claims 1 to 6.

8. Cathode according to claim 7, comprising an additional lithium metal oxygen compound, selected from the group LiCoO₂, LiMn₂O₄, LiNiO₂, LiCoPO₄, LiFePO₄, LiMnPO₄ and LiMnFePO₄ as well as mixtures thereof.

9. Cathode according to one of claims 7 or 8, which is free of conductive additives.

10. Process for the production of a lithium manganese metal phosphate according to one of the preceding claims 1 to 6, comprising the following steps:
a. producing a mixture in aqueous solution containing at least an Li starting compound, an Mn starting compound, an Fe starting compound, an M²⁺ starting compound and a PO₄³⁻ starting compound until a suspension forms,
b. the mixture and/or suspension is dispersed or ground,
c. obtaining LiFeₓMn_{1-x-y}M_{y}PO₄ from the suspension, wherein x and y have the above cited meanings, by reacting the suspension under hydrothermal conditions at temperatures of 100 °C to 200 °C under a pressure of 1 bar to 40 bar vapour pressure.

11. Process according to claim 10, wherein an additional carbon-containing component is added in step a) or step c).

12. Process according to claim 10, wherein the LiFeₓMn_{1-x-y}M_{y}PO₄ obtained in step c) is blended with a carbon-containing component.

13. Process according to one of claims 10 to 12, wherein a drying step is subsequently carried out at a temperature of <100 °C. and/or a calcining step is carried out at a temperature of more than 200 °C.

## Revendications

1. Phosphate de lithium-manganèse-métal de formule
LiFeₓMn_{1-x-y}M_{y}PO₄
dans laquelle M représente un métal divalent du groupe Zn, Ca et Cd et x < 1, 0 < y < 0,15 et x + y < 1, ou dans laquelle M représente Mg et 0,01 ≤ x ≤ 0,11, 0,07 < y < 0,2 et x + y < 0,2.

2. Phosphate de lithium-manganèse-métal selon la revendication 1, dans lequel M représente Zn ou Ca.

3. Phosphate de lithium-manganèse-métal selon l'une quelconque des revendications précédentes, dans lequel 0 < x < 0,35 pour le cas où M provient du groupe formé par Zn, Ca et Cd.

4. Phosphate de lithium-manganèse-métal selon l'une quelconque des revendications précédentes, comprenant en outre du carbone, la proportion de carbone, par rapport au phosphate de lithium-manganèse-métal, étant ≤ 4% en poids.

5. Phosphate de lithium-manganèse-métal selon la revendication 4, le carbone étant réparti régulièrement dans tout le phosphate de lithium-manganèse-métal substitué.

6. Phosphate de lithium-manganèse-métal selon la revendication 4 ou 5, le carbone couvrant les différentes particules du phosphate de lithium-manganèse-métal mélangé.

7. Cathode pour une batterie lithium-ion secondaire, contenant un phosphate de lithium-manganèse-métal selon l'une quelconque des revendications 1 à 6.

8. Cathode selon la revendication 7, contenant un autre composé de lithium-métal-oxygène, choisi dans le groupe formé par LiCoO₂, LiMn₂O₄, LiNiO₂, LiCoPO₄, LiFePO₄, LiMnPO₄ et LiMnFePO₄ ainsi que leurs mélanges.

9. Cathode selon l'une quelconque des revendications 7 ou 8, qui est exempte d'additif de milieu conducteur.

10. Procédé pour la fabrication d'un phosphate de lithium-manganèse-métal selon l'une quelconque des revendications précédentes 1 à 6, comprenant les étapes suivantes :
a. préparation d'un mélange en solution aqueuse, contenant au moins un composé de départ à base de Li, un composé de départ à base de Mn, un composé de départ à base de Fe, un composé de départ à base de M²⁺ et un composé de départ à base de PO₄³⁻ jusqu'à la formation d'une suspension,
b. réalisation d'un traitement de dispersion ou de broyage du mélange et/ou de la suspension,
c. obtention de LiFeₓMn_{1-x-y}M_{y}PO_{4,}x et y présentant les significations susmentionnées, à partir de la suspension par transformation de la suspension dans des conditions hydrothermales à des températures de 100°C à 200°C ainsi qu'à une pression de 1 bar à 40 bars de pression de vapeur.

11. Procédé selon la revendication 10, un autre composant, contenant du carbone, étant ajouté dans l'étape a) ou dans l'étape c).

12. Procédé selon la revendication 10, le LiFeₓMn_{1-x-y}M_{y}PO₄ obtenu dans l'étape c) étant mélangé avec un composant contenant du carbone.

13. Procédé selon l'une quelconque des revendications 10 à 12, une étape de séchage à une température < à 100°C et/ou une étape de calcination à une température supérieure à 200°C étant ensuite réalisée(s).
